**Europäisches Patentamt**

**European Patent Office**

**Office européen des brevets**

(19)

(11) Veröffentlichungsnummer : **0 057 760**
**B1**

(12)

# EUROPÄISCHE PATENTSCHRIFT

(45) Veröffentlichungstag der Patentschrift :
**18.09.85**

(51) Int. Cl.⁴ : **H 04 N 9/64**

(21) Anmeldenummer : **81109141.2**

(22) Anmeldetag : **28.10.81**

(54) **Verfahren und Anordnung zum Herausfiltern des Luminanzsignals aus einem FBAS-Fernsehsignal.**

(30) Priorität : **09.02.81 DE 3104456**

(43) Veröffentlichungstag der Anmeldung :
**18.08.82 Patentblatt 82/33**

(45) Bekanntmachung des Hinweises auf die Patenterteilung : **18.09.85 Patentblatt 85/38**

(84) Benannte Vertragsstaaten :
**DE FR GB**

(56) Entgegenhaltungen :
**FR-A- 2 399 773**
**C.H. Sequir et al. "Charge transfer devices", Academic Press Inc., New York, 1975, S. 201-206**

(73) Patentinhaber : **Siemens Aktiengesellschaft**
**Berlin und München Wittelsbacherplatz 2**
**D-8000 München 2 (DE)**

(72) Erfinder : **Lüder, Rainer, Dr. Ing.**
**Kohlstattstrasse 10**
**D-8024 Oberhaching (DE)**
Erfinder : **Haussmann, Wolfgang, Dipl.-Ing.**
**Untersbergstrasse 90**
**D-8000 München 90 (DE)**

**Beschreibung**

Die Erfindung betrifft ein Verfahren und eine Anordnung zum Herausfiltern des Luminanzsignals aus einem FBAS-Fersehsignal mit einem CTD-Filter, wie es im Oberbegriff des Anspruchs 1 beschrieben ist.

Im Farbsignalteil eines Farbfernsehempfängers wird das videofrequente FBAS (Farbbildaustastsynchronisation) — Signal in das Luminanzsignal (Leuchtdichtesignal) und in das Chrominanzsignal (Farbartsignal) aufgespalten. Das Chrominanzsignal wird dann entsprechend dem Farbmodulationsverfahren (PAL, SECAM, NTSC) demoduliert, und diese Farbsignale und das Luminanzsignal werden über eine Matrix der Bildröhre zugeführt.

Die zur Gewinnung des Luminanzsignals erforderliche Abtrennung der Chrominanzkomponenten des FBAS-Signals erfolgt üblicherweise in einer, das Farbspektrum von 3,1 bis 5 MHz ausreichend unterdrückenden « Farbfalle ». Als Farbfalle wird in der Regel ein LC-Schwingkreis, beispielsweise ein im Kollektorkreis eines vom FBAS-Signal angesteuerten Transistors befindlicher Serienschwingkreis verwendet, dessen Bandbreite durch einen parallel geschalteten Widerstand eingestellt werden kann.

Solche aus Spulen und/oder Kondensatoren aufgebaute Filter haben jedoch einen nichtlinearen Phasengang, was zu einer im Bild sichtbaren Verzerrung der Impulsantwort führt. Zum einen haben diese Filter ein schlechtes Zeitverhalten, da jeder Luminanzsprung den Schwingkreis zu einer gedämpften Schwingung anregt. Zum anderen treten störende Einschwingvorgänge auch dann auf, wenn sich die Phase des Farbträgers stark ändert, z. B. beim Übergang von grün nach purpur.

Durch die Verwendung von aufwendig konstruierten Vierpolen als Farbfalle wird das Zeitverhalten des Luminanzkanals nur wenig verbessert.

Aus der DE-OS 833 884 ist ein Schaltungsanordnung zum Herausfiltern eines Luminanzsignals aus einem FBAS-Farbfernsehsignal mit einem CTD-Filter bekannt. Dazu weist das Filter zwei getrennte Eingangskanäle auf, wobei der Ladungsteil eines Kanals gegenüber dem Ladungsteil des anderen verzögert wird. Das auf diese Weise ausgefilterte Leuchtdichtesignal ist an einem gemeinsamen Kanal (Haupt-kanal) abgreifbar.

Ferner ist in der Veröffentlichung von C. H. Sequin und M. F. Tompset mit dem Titel « Charge Transfer Devices », Academic Press Inc., New York 1975, S. 201 und S. 206 aufgeführt, CTD-Filter für Zeilenverzögerungsleitungen bei einem Farbfernsehempfänger zu verwenden, bei welchem das zu verarbeitende Signal mit seiner doppelten Frequenz abgetastet und in ein zu seiner Spannung proportionales Ladungspaket umgewandelt wird. Daraus ist ferner bekannt, zehn parallele CTD-Kanäle im Multiplexbetrieb zur Verzögerung von Farbfernsehsignalen vorzusehen.

Aufgabe der vorliegenden Erfindung ist es, hier Abhilfe zu schaffen und ein Verfahren zum Herausfiltern des Luminanzsignals aus einem FBAS-Signal vorzusehen, das ein verbessertes Zeitverhalten des Luminanzkanals ermöglicht.

Diese Aufgabe wird erfindungsgemäß dadurch gelöst, daß das Ladungspaket des gemeinsamen Haupftkanals im Verhältnis 1 : 1 in einen ersten und in einen zweiten Ladungsteil aufgeteilt wird und daß beide Ladungsteile über getrennte Zweige, die so ausgeführt sind, daß der erste Ladungsteil gegenüber dem zweiten Ladungsteil zeitlich um eine Abtastperiode verzögert wird, geführt und anschließend in einem Ausgangskanal wieder vereinigt werden. Durch dieses Verfahren gelingt es ein Filter zu realisieren, das eine Nullstelle bei der Farbträgerfrequenz besitzt. Bei einer der zweifachen farbträgerfrequenz entsprechenden Abtastfrequenz ($2f_{FT}$ = 8,867 MHz bei PAL-Norm) tritt eine Unterabtastung des Luminanzsignals auf. Die daher im Frequenzbereich 4-5 MHz entstehenden Faltungsprodukte bleiben ohne störenden Einfluß auf die Bildqualität, da die Luminanz- und Chrominanzanteile bei der Faltung zwischen Vielfache der Zeilenfrequenz fallen, wo sie subjektiv kaum wahrgenommen werden.

Eine Anhebung des Frequenzganges oberhalb von 2 MHz kann vorteilhafterweise dadurch erreicht werden, daß das zu filternde FBAS-Fernsehsignal in drei getrennten Eingangsstufen mit der doppelten Farbträgerfrequenz abgetastet und in je ein seiner Spannung proportionales Ladungseingangspaket umgewandelt wird, daß das erste Ladungseingangspaket gegenüber dem zweiten Ladungseingangspaket zeitlich um eine Abtastperiode und das dritte Ladungseingangspaket gegenüber dem zweiten Ladungseingangspaket zeitlich um zwei Abtastperioden verzögert wird und daß die drei Eingangsstufen dann zur anschließenden Ladungsaufteilung in einem Hauptkanal zusammengeführt werden.

Eine Anordnung zur Durchführung des erfindungsgemäßen Verfahrens kann in wirtschaftlich günstiger Weise durch eine Aufspaltungsstufe, in der das Ladungspaket des gemeinsamen Hauptkanals in ein erstes und ein zweites Ladungsteil im Verhältnis 1 : 1 geteilt wird, eine Verzögerungsstufe, in der das erste Ladungsteil gegenüber dem zweiten Ladungsteil um eine Abtastperiode verzögert wird und eine Vereinigungsstufe in der beide Ladungsteile in einem gemeinsamen Ausgangskanal vereinigt sind, realisiert werden.

Ausgestaltungen der erfindungsgemäßen Anordnung sind in den abhängigen Patentansprüchen gekennzeichnet.

Die Erfindung wird im folgenden anhand der Figuren näher erläutert. Es zeigen :

die Fig. 1 ein als CCD (Charge-Coupled-Device) ausgeführtes Ausführungsbeispiel für eine Anordnung zur Durchführung des erfindungsgemäßen Verfahrens,

die Fig. 2 den Frequenzgang einer erfindungsgemäßen Anordnung und

die Fig. 3 bis 6 graphische Darstellungen unterschiedlicher, in Farbfallen auftretender Signale.

2

## 0 057 760

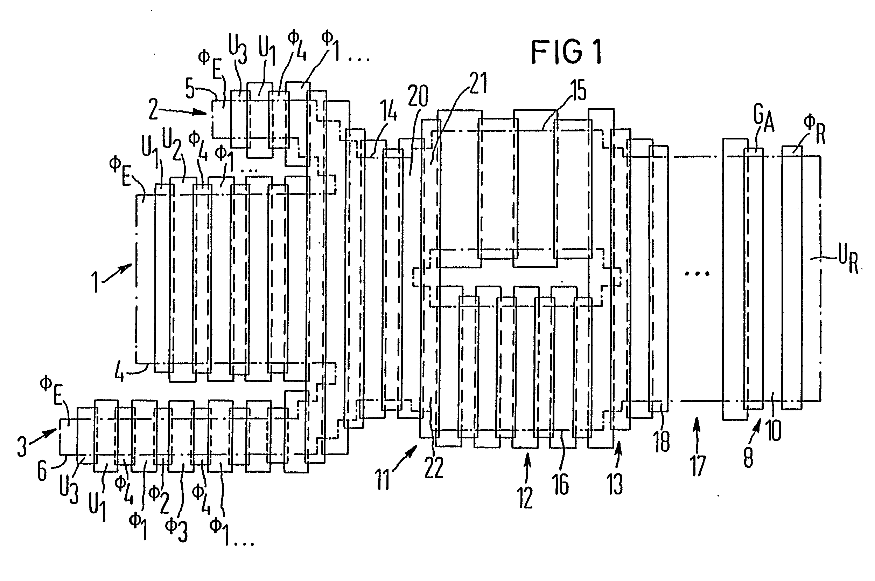

Die Fig. 1 zeigt die Ladungstransferkanäle und die Elektrodenkonfiguration eines als CCD ausgeführten CTD (Charge Transfer Device) -Filters, das zur Durchführung des erfindungsgemäßen Verfahrens dient. Beim als Ausführungsbeispiel gewählten Filter handelt es sich um eine Vier-Phasen-Schaltung mit drei getrennten, aber gemeinsam angesteuerten Eingangsstufen 1, 2, 3, die nach der sogenannten « Fill and Spill » -Methode arbeiten.

Das Einbringen von Ladungen in die Eingangs-Potentialmulde eines CCD nach der « Fill and Spill » -Methode ist bekannt und in der Literaturstelle C. H. Séquin, M. F. Tompsett, Charge Transfer Devices, 1975, Academic Press, insbesondere auf den Seiten 48-61 näher beschrieben.

Die drei Eingangsstufen 1, 2, 3 werden zu einem gemeinsamen Hauptkanal 14 zusammengeführt. Der Hauptkanal 14 wird in einer Aufspaltungsufe 11 in 2, die Verzögerungsstufe 12 bildende Kanäle 15, 16 aufgeteilt, die anschließend in einer Vereinigungsstufe 13 wieder zum Ausgangskanal 18 zusammengeführt werden. Das Signal wird anschließend in einer Luminanzverzögerungsstufe 17 zum Erzielen eines Laufzeitausgleiches zwischen Luminanzkanal und Chrominanzkanal weiter verzögert und in der Ausgangsstufe 8 ausgegeben.

Die drei Eingangsstufen 1, 2, 3 des CCD-Filters weisen je einen — strichpunktiert dargestellten — Transferkanal 4, 5, 6 auf, über dem in an sich bekannter Weise verschiedene Gateelektroden angeordnet sind. Das an den Elektroden $U_1$ aller Eingangsstufen 1, 2, 3 anliegende Eingangssignal wird mittels des für alle Eingangsstufen 1, 2, 3 identischen, an den Eingangsdioden angelegten und der doppelten Farbträgerfrequenz (bei PAL-Norm 8,867 MHz) entsprechenden Eingangstaktes $\varphi_E$ abgetastet. $U_2$ und $U_3$ sind Hilfssignale (Gleichspannungen). Eine Speicherzelle des Vier-Phasen-CCD weist vier, von den Taktphasen $\varphi_1$, $\varphi_2$, $\varphi_3$ und $\varphi_4$ beaufschlagte Elektroden auf. Die Taktfrequenzen sind mit der Abtastfrequenz identisch, während die Phasen jeweils um eine viertel Periode verschoben sind. Die Eingangsstufe 2 weist eine Speicherzelle, die Eingangsstufe 1 zwei Speicherzellen und die Eingangsstufe 3 drei Speicherzellen auf. Da die drei Kanäle 4, 5, 6 der Eingangsstufen 1, 2, 3 zu einem Hauptkanal 14 zusammengeführt werden, erreicht das Eingangssignal den Hauptkanal 14 über die Eingangsstufe 2 um eine Taktperiode früher als über die Eingangsstufe 1, während das Eingangssignal über die Eingangsstufe 3 den Hauptkanal 14 um eine Taktperiode später als über die Eingangsstufe 1 erreicht. Im Hauptkanal 14 werden die Signale der Eingangsstufen 1, 2, 3 summiert, so daß das so entstandene Filter z-transformiert folgenden Übertragunscharakteristik aufweist :

$$H_2(z) = (y(z))/x(z) = K_2 + K_1{}^{-1} + K_3 z^{-2}$$

mit
x(z) : Eingangssignal
y(z) : Ausgangssignal
$K_1$, $K_2$, $K_3$ : Gewichtungskoeffizienten
$z = e^{j\omega T}$, T = Taktperiode.

Die Farbfalle wird dadurch realisiert, daß der Hauptkanal 14 in der Aufspaltungsstufe 11 in zwei flächengleiche, Teile 15 und 16 aufgespalten wird und die aufgespaltenen Kanäle 15 und 16 anschließend in der Vereinigungsstufe 13 zum Ausgangskanal 18 wieder zusammengeführt werden. Da der Kanal 16 eine Speicherzelle mehr aufweist als der Kanal 15, ist das in der Vereinigungsstufe 13 vorliegende Signal proportional der Summe aus einerseits dem unverzögerten und andererseits dem um eine Taktperiode verzögerten Signal der Aufspaltungsstufe 11.

In der Aufspaltungsstufe 11 wird das unter der Elektrode 20 liegende Ladungspaket in zwei gleich große, unter den Elektroden 21 und 22 befindliche Ladungsteile geteilt. Eine exakte Aufteilung im Verhältnis 1 : 1 kann in technologisch einfacher Weise durch identische Ausgestaltung der Kanäle 15 und 16 der Elektrode 21 und 22 erreicht werden. Das, im mit vier Taktelektroden ausgestatteten Kanal 15 um eine Abtastperiode verzögerte Signal wird mit dem, im mit acht Taktelektroden ausgestatteten Kanal 16 um zwei Abtastperioden verzögerten Signal in der Vereinigungsstufe 13 summiert, so daß das aus den Stufen 11, 12 und 13 bestehende CCD-Filter die Übertragungscharakteristik $H_1(z) = (0,5 + 0,5\ z^{-1})$ hat.

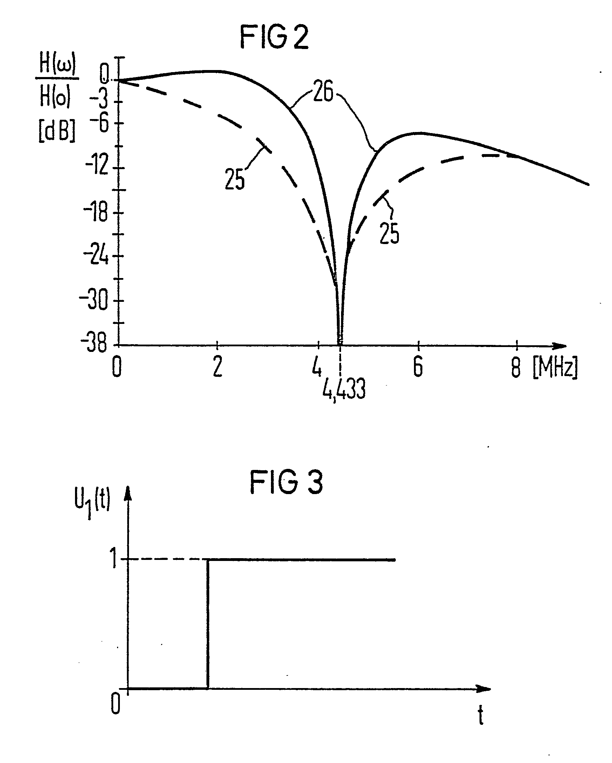

Das Filter wirkt als Farbfalle, da es eine Nullstelle bei der Farbträgerfrequenz aufweist. Der Frequenzgang eines entsprechenden Filters, das mit der zweifachen Farbträgerfrequenz als Abtastfrequenz arbeitet, ist in der Fig. 2 mit der Kurve 25 dargestellt. Bei der Abtastfrequenz $f_A = 2\ f_{FT} = 8,867$ MHz tritt eine Unterabtastung des Luminanzsignals auf, wodurch Faltungsprodukte im Frequenzbereich 4 MHZ < f < MHz entstehen. Diese sind jedoch ohne störenden Einfluß auf die Bildqualität, da zum ersten das übliche ZF-Filter Spektralanteile des Videosignals mit Frequenzen größer der Farbträgerfrequenz dämpft, zweitens die Luminanz- und Chrominanzanteile bei der Faltung zwischen Vielfache der Zeilenfrequenz fallen, wo sie subjektiv weniger stark wahrgenommen werden, und drittens das erfindungsgemäße Luminanzfilter gerade diese Spektralanteile unterdrückt.

Die Wahl der vierfachen Farbträgerfrequenz als Abtastfrequenz bringt demgegenüber keine wesentlichen Vorteile, erhöht aber die technologischen Anforderungen beim CCD-Filter sowie den Aufwand bei der Takterzeugung.

Da eine nur aus den Stufen 11, 12 und 13 bestehende Farbfalle in Verbindung mit dem in einer Eingangsstufe stattfindenden Abtast-Halte-Vorgang zu einem deutlichen Dämpfungsanstieg für Luminanzsignale über 2 MHz führt, ist in Weiterbildung der Erfindung vorgesehen, den Frequenzgang des

3

Filters über 2 MHz durch die eingangs bereits geschilderte besondere Anordnung der Eingangsstufen 1, 2, 3 anzuheben. Die im Hauptkanal 14 zusammengeführten Eingangsstufen 1, 2, 3 führen zu der Filterfunktion $H_2(z) = K_2 + K_1 z^{-1} + K_3 z^{-2}$.

Die Impulsantwort dieses Filters wird durch die Wahl der Koeffizienten $K_1$, $K_2$ und $K_3$ bestimmt, wobei Absolutbetrag und Vorzeichen der Koeffizienten durch die Ausgestaltung der zu den betreffenden Koeffizienten gehörenden Eingangsstufen bestimmt werden. Das Verhältnis des Absolutbetrages der Koeffizienten wird durch das Flächenverhältnis der Elektroden, unter denen die der Eingangsspannung proportionale Ladung gebildet wird, festgelegt. D. h. die wirksame Fläche der Eingangselektroden wird so gewählt, daß das Verhältnis dieser Flächen dem gewünschten Verhältnis der Koeffizienten entspricht. Um im übrigen gleiche Eingangskennlinien zu gewährleisten, sollte die räumliche Anordnung und die technologische Herstellung der Eingangselektroden, bzw. der Eingangsstufen, insbesondere Zusammensetzung und Dicke des unter den Elektroden liegenden Dünnoxids und die Grunddotierung des Kanals — den Verhältnissen bei der Herstellung Aufspaltungsstufe 11 vergleichbar — identisch sein.

Negative Vorzeichen der Koeffizienten $K_1$, $K_2$, $K_3$ werden dadurch realisiert, daß Eingangsstufen, die einen negativen Koeffizienten realisieren, gegenüber einen positiven Koeffizienten realisierenden Eingangsstufen invertierend ausgeführt sind. Dies ist im Ausführungsbeispiel bei den Eingangsstufen 2 und 3 der Fall. Steuert das Eingangssignal $U_1$ die erste Elektrode der Eingangsstufe an, so arbeitet die Schaltung nichtinvertierend. Wird $U_1$ dagegen auf die zweite Elektrode gelegt, so ergibt sich ein invertierendes Verhalten. Im in der Fig. 1 gezeigten Beispiel arbeiten demnach die äußeren Eingangsstufen 2, 3 invertierend, während die mittlere Eingangsstufe 1 nicht-invertierend arbeitet, die Koeffizienten $K_2$ und $K_3$ sind also negativ, der Koeffizient $K_1$ positiv.

Um ein günstiges Zeitverhalten zu erreichen, empfiehlt es sich die Eingangsstufen 2 und 3 im Vergleich zu Eingangsstufe 1 invertierend auszuführen und die Flächen der Gate-Elektrode $U_1$ der Eingangsstufen 2 und 3, unter denen die der Eingangsspannung proportionalen Ladungspakete gebildet werden, so auszuführen, daß sie 10-30 % der entsprechenden Fläche der Gate-Elektrode $U_2$ der Eingangsstufe 1 betragen.

Wegen der hohen Taktfrequenz von ca. 8,86 MHz empfiehlt es sich, die Kanäle 4, 5, 6 zwischen den Eingangsstufen 1, 2, 3 und der Zusammenführung zum Hauptkanal 14 so auszuführen, daß die zurückzulegende Strecke der Ladungsträger von Elektrode zu Elektrode möglichst wenig erhöht wird. Dies kann vorteilhafterweise — wie in Fig. 1 gezeigt — dadurch geschehen, daß die Kanäle 5 und 6 der Eingangsstufen 2 und 3 zum mittleren Kanal 4 hinzeigend treppenförmig ausgeführt sind und die zu den Kanälen gehörenden Elektroden entsprechend von Elektrode zu Elektrode in ihrer Längsrichtung verschoben werden.

In der Luminanzverzögerungsstufe 17 kann das erfindungsgemäße CCD-Filter durch Ergänzung weniger Elektroden so bemessen werden, daß die Gruppenlaufzeit des Luminanzkanals der des Chrominanzzweiges des Farbdecoders entspricht.

Die Gestaltung der Ausgangsstufe 8, in der das in der Vereinigungsstufe 13 summierte gegebenenfalls über die Luminanzverzögerungsstufe 17 verzögerte Ladungspakete in eine proportionale Spannung umgesetzt wird, ist z. B. aus der obengenannten Literaturstelle « Charge Transfer Devices » bekannt. In der Fig. 1 sind mit $G_A$ das Ausgangsgate, mit $\phi_R$ der Rücksetztakt und mit $U_R$ die Rücksetzspannung bezeichnet. Das Ausgangssignal wird über die Verbindung 10 zu einer Ausgangsschaltung geführt. Das gezeigte Ausführungsbeispiel arbeitet mit einem Vier-Phasen-Takt und ist in CCD-Technik hergestellt. Es ist aber ebensogut möglich, das erfindungsgemäße Filter in einer anderen CTD-Technik, beispielsweise als BBD (Bucket-Brigade Device) und/oder mit anderenTaktarten, z. B. 2 oder 3 - Phasen-Takt, arbeitend auszuführen.

Beispiel

Ein Ausführungbeispiel zur Durchführung des erfindungsgemäßen Verfahrens wurde so dimensioniert, daß die Koeffizienten $K_2$ und $K_3$ die Werte -0,15 und der Koeffizient $K_1$ den Wert 0,7 erhielt. Die Kanalbreiten der Eingangsstufen 2 und 3 betragen 15 µm, die Kanalbreite der Eingangsstufe 1 70 µm. Um den Ladungsverlust gering zu halten werden die Kanäle der beiden invertierenden Eingangsstufen 2 und 3 durch stückweises Parallelverschieben der Elektroden an den 70 µm breiten Kanal 4 der Eingangsstufe 1 herangeführt und schließlich zum Hauptkanal 14 verbunden. In der selben Art wird die aus den Stufen 11, 12 und 13 bestehende Farbfalle ausgeführt. Die Elektrodenlänge beträgt 7 µm.

Den erhaltenen Frequenzgang des CCD-Luminanzfilters bei einer der doppelten Farbträgerfrequenz entsprechenden Abtastfrequenz (8, 867 MHz) zeigt die Linie 26 der Fig. 2.

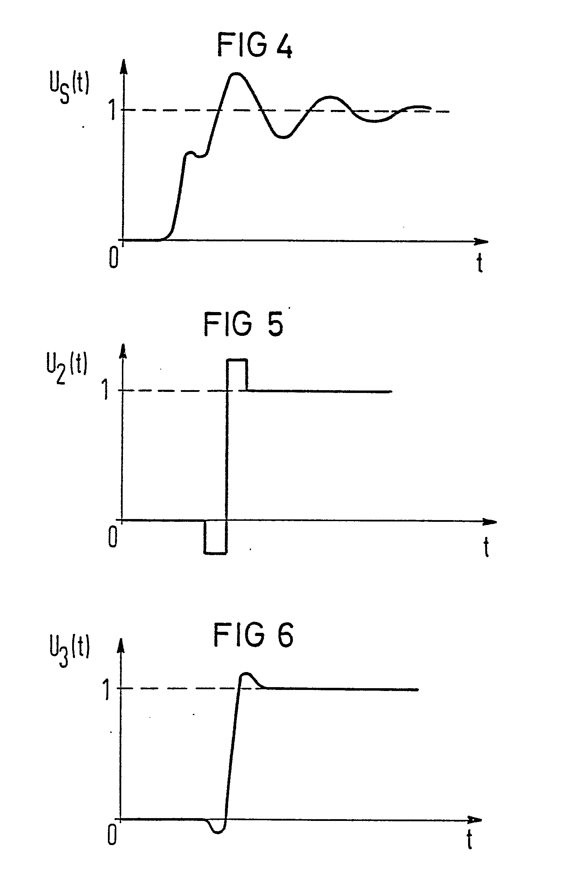

Das verbesserte Zeitverhalten der Erfindungsgemäßen Anordnung wird anhand der Figuren 3 bis 6 dargelegt. Ein Eingangssignal $U_1$ (t) der in der Fig. 3 gezeigten Stufenform führt bei einer Farbfalle nach dem Stand der Technik, bei der ein vom FBAS-Signal angesteuerter Transistor verwendet wird, in dessen Kollektorkreis ein Serienschwingkreis mit parallelem Arbeitswiderstand liegt, wobei der Serienschwingkreis in seiner Resonanzfrequenz auf die Farbträgerfrequenz eingestellt ist, zu einer in der Fig. 4 gezeigten Ausgangsfunktion $U_S$ (t). Wie zu erkennen ist, antwortet eine solche Farbfalle auf den Eingangssprung mit einer gedämpften Schwingung. Das Zeitverhalten dieser Schaltung ist daher nicht zufriedenstellend.

4

## 0 057 760

Legt man ein Eingangssignal der in der Fig. 3 gezeigten Stufenform jedoch an die Eingangselektroden der erfindungsgemäßen Anordnung, so ergibt sich die in der Fig. 5 gezeigte Zeitfunktion $U_2$ (t) an einer Stelle des Kanals 14, an der alle drei Einganstufen 1, 2, 3 bereits zusammengeführt sind, eine Kanalaufspaltung aber noch nicht stattgefunden hat. Das sichtbare Überschwingen dient der Frequenzganganhebung und wird durch die Wahl der Koeffizienten $K_1$, $K_2$, $K_3$ bestimmt. Durchläuft die Spannung $U_2$ (t) die Verzweigungsschaltung 12 und daran anschließend einen in der Ausgangsschaltung befindlichen Tiefpaß, so ergibt sich die in der Fig. 6 gezeigte Ausgangsfunktion $U_3$ (t). Im Vergleich zur Zeitfunktion $U_S$ (t) der Fig. 4 wird das verbesserte Zeitverhalten der nach dem erfindungsgemäßen Verfahren arbeitenden Anordnung deutlich.

Ein weiterer Vorteil einer solchen Anordnung ist die kostengünstige und einfache Herstellung in MOS-Technologie und die einfache Realisierung der Luminanzverzögerung zum Laufzeitausgleich zwischen Luminanzkanal und Chrominanzkanal. Das erfindungsgemäße Verfahren kann auf alle bekannten Farbfernsehverfahren (PAL, NTSC, SECAM) angewandt werden.

**Patentansprüche**

1. Verfahren zum Herausfiltern des Luminanzsignals aus einem FBAS-Fernsehsignal mit einem CTD-Filter, wobei das FBAS-Signal mit der doppelten Farbträgerfrequenz abgetastet und in einer zu seiner Spannung proportionales Ladungspaket umgewandelt wird, dadurch gekennzeichnet, daß das Ladungspaket des gemeinsammen Hauptkanals im Verhältnis 1 : 1 in einen ersten und in einen zweiten Ladungsteil aufgeteilt wird und daß beide Ladungsteile über getrennte Zweige (15, 16), die so ausgeführt sind, daß der erste Ladungsteil gegenüber dem zweiten Ladungsteil zeitlich um eine Abtastperiode verzögert wird, geführt und anschließend in einem Ausgangskanal (18) wieder vereinigt werden.

2. Verfahren nach Anspruch 1, dadurch gekennzeichnet, daß das zu filternde FBAS-Fernsehsignal in drei getrennten Eingangsstufen (1, 2, 3) mit der doppelten Farbträgerfrequenz abgetastet und in je ein seiner Spannung proportionales Ladungseingangspaket umgewandelt wird, daß das erste Ladungseingangspaket gegenüber dem zweiten Ladungseingangspaket zeitlich um eine Abtastperiode und das dritte Ladungseingangspaket gegenüber dem zweiten Ladungseingangspaket zeitlich um zwei Abtastperioden verzögert wird und daß die drei Eingangsstufen (1, 2, 3) dann zur anschließenden Ladungsaufteilung in einem Hauptkanal (14) zusammengeführt werden.

3. Anordnung zur Durchführung des Verfahrens nach Anspruch 1 oder 2, gekennzeichnet durch eine Aufspaltungsstufe (11), in der das Ladungspaket des gemeinsamen Hauptkanals in einen ersten und einen zweiten Ladungsteil im Verhältnis 1 : 1 geteilt wird, eine Verzögerungsstufe (12), in der der erste Ladungsteil gegenüber dem zweiten Ladungsteil um eine Abtastperiode verzögert wird, und eine Vereinigungsstufe (13), in der beide Ladungsteile in einem gemeinsamen Ausgangskanal vereinigt werden.

4. Anordnung nach Anspruch 3, dadurch gekennzeichnet, daß als Eingangsstufe drei getrennte, gemensam angesteuerte Eingangskanäle (4, 5, 6), vorgesehen sind, die zu einem gemeinsamen Hauptkanal (14) zusammengeführt sind und die so ausgeführt sind, daß das Signal den Hauptkanal (14) über den zweiten Eingangskanal (5) um eine Abtastperiode früher als über den ersten Eingangskanal (4) und über den dritten Eingangskanal (6) um eine Abtastperiode später als über den ersten Eingangskanal (4) erreicht.

5. Anordnung nach Anspruch 3 oder 4, dadurch gekennzeichnet, daß die Fläche der Gateelektrode ($U_1$) des zweiten Eingangskanals (5), unter der das der Eingangspannung proportionale Ladungspaket gebildet wird, 10-30 % der Fläche der entsprechenden Gateelektrode ($U_2$) des ersten Eingangskanals (4) beträgt.

6. Anordnung nach einem der Ansprüche 3 bis 5, dadurch gekennzeichnet, daß die Fläche der Gateelektrode ($U_1$) des dritten Eingangskanals (6), unter der das der Eingangsspannung proportionale Ladungspaket gebildet wird, 10-30 % der Fläche der entsprechenden Gateelektrode ($U_2$) des ersten Eingangskanals (4) beträgt.

7. Anordnung nach einem der Ansprüche 3 bis 6, dadurch gekennzeichnet, daß der zweite und der dritte Eingangskanal (5, 6) im Vergleich zum ersten Eingangskanal (4) invertierend ausgeführt sind.

**Claims**

1. A method of separating the luminance signal from a colour television signal by means of a CTD filter, wherein colour signal samples obtained at twice the colour carrier frequency are each converted into a charge parcel proportional to its voltage, characterised in that the charge parcel of the common main channel is divided at the ratio 1 : 1 into a first and a second charge component, and that both charge components are conveyed via separate branches (15, 16) so designed that the first charge component is delayed in time by one sampling period with respect to the second charge component, and subsequently recombined in a first output channel (18).

2. A method as claimed in Claim 1, characterised in that the colour television signal to be filtered is sampled at twice the colour carrier frequency in three separate input stages (1, 2, 3) and converted into respective input charge parcels, proportional to its voltage in each case, and that the first input charge

# 0 057 760

parcel is delayed in time by one sampling period in relation to the second input charge parcel and the third input charge parcel is delayed in time by two sampling periods in relation to the second input charge parcel, and that the three input stages (1, 2, 3) are then combined in a main channel (14) for the subsequent charge division.

3. Apparatus for carrying out the method as claimed in Claim 1 or 2, characterised by a splitting stage (11), wherein the charge parcel of the common main channel is divided into a first and a second charge component at the ratio of 1 : 1 by a delay stage (12), wherein the first charge component is delayed by one sampling period in relation to the second charge component, and by a combining stage (13) wherein both charge components are combined in a common output channel.

4. Apparatus as claimed in Claim 3, characterised in that an input stage has three separate, commonly controlled input channels (4, 5, 6) provided, brought together to a common main channel (14) and so constructed that the signal reaches the main channel (14) via the second input channel (5) one sampling period earlier than via the first input channel (4), and later by one sampling period via the third input channel (6) than via the first input channel (4).

5. Apparatus as claimed in Claim 3 or 4, characterised in that the surface of the gate electrode ($U_1$) of the second input channel (5), below which the charge parcel proportional to the input voltage is formed is from 10 to 30 % of the surface of the corresponding gate electrode ($U_2$) of the first input channel (4).

6. Apparatus as claimed in one of Claims 3 to 5, characterised in that the surface of the gate electrode ($U_1$) of the third input channel (6), below which the charge parcel proportional to the input voltage is formed, is from 10 to 30 % of the surface of the corresponding gate electrode ($U_2$) of the first input channel (4).

7. Apparatus as claimed in one of Claims 3 to 6, characterised in that the second and third input channels (5, 6) are inverted in comparison to the first input channel (4).

## Revendications

1. Procédé pour extraire le signal de luminance par filtrage d'un signal complet de chrominance en télévision, comprenant un filtre CTD, avec échantillonnage du signal complet de chrominance à la fréquence double de la fréquence de la sous-porteuse de couleur et transformation en un paquet de charges proportionnel à sa tension, caractérisé en ce que le paquet de charges du canal principal commun est partagé avec le rapport 1 : 1 en une première et une deuxième partie de charges et que les deux parties de charges sont acheminées par des branches séparées (15, 16), qui sont réalisées de manière que la première partie de charges soit retardée dans le temps d'une période d'échantillonnage par rapport à la deuxième partie de charges et sont ensuite réunies de nouveau dans un canal de sortie (18).

2. Procédé selon la revendication 1, caractérisé en ce que le signal complet de chrominance à filtrer est échantillonné avec la double fréquence de la sous-porteuse de couleur en trois étages d'entrée séparés (1, 2, 3) où il est transformé chaque fois en un paquet de charges d'entrée proportionnel à sa tension, que le premier paquet de charges d'entrée est retardé d'une période d'échantillonnage par rapport au deuxième et le troisième paquet de charges d'entrée est retardé de deux périodes d'échantillonage par rapport au deuxième et que les trois étages d'entrée (1, 2, 3) sont ensuite rassemblés, pour le partage de charges consécutif, en un canal principal (14).

3. Dispositif pour la mise en œuvre du procédé selon la revendication 1 ou 2, caractérisé par un étage de division (11), dans lequel le paquet de charges du canal principal commun est partagé avec le rapport 1 : 1 en une première et une deuxième partie de charges un étage à retard (12), dans lequel la première partie de charges est retardée d'une période d'échantillonnage par rapport à la deuxième partie de charges, et un étage de réunion (13) dans lequel les deux parties de charge sont rassemblées en un canal de sortie commun.

4. Dispositif selon la revendication 3, caractérisé en ce qu'il comprend, comme étage d'entrée, trois canaux d'entrée séparés attaqués conjointement (4, 5, 6), qui sont rassemblés en un canal principal commun (14) et qui sont réalisés de manière que le signal passant par le second canal d'entrée (5) atteigne le canal principal (14) une période d'échantillonnage plus tôt que par le premier canal d'entrée (4) et atteigne le canal principal (14) par le troisième canal d'entrée (6) une période d'échantillonnage plus tard que par le premier canal d'entrée (4).

5. Dispositif selon la revendication 3 ou 4, caractérisé en ce que l'aire de surface de l'électrode de porte ($U_1$) du second canal d'entrée (5), sous laquelle est formé le paquet de charge proportionnel à la tension d'entrée, représente 10-30 % de l'aire de surface de l'électrode de porte ($U_2$) correspondante du premier canal d'entrée (4).

6. Dispositif selon une des revendications 3 à 5, caractérisé en ce que l'aire de surface de l'électrode de porte ($U_1$) du troisième canal d'entrée (6), sous laquelle est formé le paquet de charge proportionnel à la tension d'entrée, représente 10-30 % de l'aire de surface de l'électrode de porte correspondante ($U_2$) du premier canal d'entrée (4).

7. Dispositif selon une des revendications 3 à 6, caractérisé en ce que le deuxième et le troisième canal d'entrée (5, 6) sont réalisés en inverseurs comparativement au premier canal d'entrée (4).

6

FIG 1

0 057 760

## FIG 2

$$\frac{H(\omega)}{H(o)} \quad [dB]$$

## FIG 3

$U_1(t)$

FIG 4

$U_S(t)$

1

0

t

FIG 5

$U_2(t)$

1

0

t

FIG 6

$U_3(t)$

1

0

t